# EUROPÄISCHE PATENTSCHRIFT

(11) **EP 3 969 789 B1**
(45) Veröffentlichungstag und Bekanntmachung des Hinweises auf die Patenterteilung: **03.07.2024**
(21) Anmeldenummer: 20728927.3
(22) Anmeldetag: 14.05.2020
(51) Int. Cl.: F16K 1/44, F16K 11/044, F16K 27/02, F16K 31/126

(54) **MEMBRAN-SITZVENTIL**
DIAPHRAGM POPPET VALVE
SOUPAPE À SIÈGE À MEMBRANE

(30) Priorität: 14.05.2019 DE 102019003379
(43) Veröffentlichungstag der Anmeldung: 23.03.2022
(73) Patentinhaber: Aventics GmbH, 30880 Laatzen (DE)
(72) Erfinder: MEYER, Heinz-Hermann, 30926 Seelze (DE)
(74) Vertreter: Spahn, Tobias
(86) Internationale Anmeldenummer: PCT/DE2020/100421
(87) Internationale Veröffentlichungsnummer: WO 2020/228911

(56) Entgegenhaltungen:
- CN-A- 1 696 555
- DE-C2- 4 308 747
- JP-A- 2001 208 237
- US-A- 2 942 837
- US-A- 5 931 187

## Beschreibung

### Technisches Gebiet

Die Erfindung betrifft ein Membran-Sitzventil.

### Stand der Technik

Im Stand der Technik bekannte Membranventile dienen generell der Trennung eines Steuerraums von einem Arbeitsraum. Dies dient beispielsweise zur Medientrennung bei der Verwendung unterschiedlicher Steuer- und Arbeitsmedien (z.B. Gas/Fluid) oder zur Gewährleistung hinreichender Hygieneanforderungen in hygienisch sensiblen Anforderungsbereichen, zum Beispiel für Anwendungen im Bereich der Medizin (Life Science) oder der Nahrungsmittelherstellung (Food/Beverage). Die Trennung des Steuer- und des Arbeitsraums dient gleichzeitig häufig der Sicherstellung einer hinreichenden Reinigbarkeit (Cleaning-in-Place, "CIP") des Arbeitsraums von Rückständen eines Arbeitsmediums oder einer hinreichenden Desinfizierbarkeit (Sterilisation-in-Place oder Steam-in-Place, "SIP") des Arbeitsraums. Zur Vermeidung von Toträumen und zur Minimierung des erforderlichen Reinigungs- oder Desinfektionsaufwands ist hierbei ein möglichst einfacher Ventilaufbau mit möglichst wenigen Einzelteilen wünschenswert.

Aus der AT 262703 B ist ein 3/2-Magnetvil in Sitzbauweise bekannt, bei welchem ein aus einer elastischen Kunststoffmasse bestehendes Doppelsitz-Verschlussstück in axialer Richtung auf beiden Seiten mit schlauchartigen Ansätzen ausgebildet ist, wobei ein Betätigungsgestänge eines Magnetankers in die schlauchartigen Ansätze eingreift. Die membranartige Umhüllung des Doppelsitz-Verschlussstücks dient der Abdichtung des Steuerteils (des Magnetankerraums) gegenüber dem Arbeitsteil des Ventils für den Einsatz stark korrodierender Gase oder Flüssigkeiten. Das von der AT 262703 B offenbarte Mehrwegmagnetventil ist relativ komplex und kleinteilig aufgebaut, wobei das Doppelsitz-Verschlussstück aufwendig als Umhüllung an ein Gestänge des Magnetankers angeformt werden muss. Ferner offenbart die AT 262703 B keine technische Lösung für eine druckmittelbasierte Ventilbetätigung. Schließlich sind die Dichtflächen des Doppelsitz-Verschlussstücks als Bewegungsdichtungen ausgeführt, die einen Reibschluss zu den korrespondierenden Dichtsitzen ausüben und daher funktionsbedingt einer relativ starken Alterung unterliegen.

Die DE 4308747 C2 offenbart ein 3/2-Magnetventil in Sitzbauweise mit einer der Abdichtung eines Magnetankerraums gegenüber einem Arbeitsteil des Ventils gegen aggressive Arbeitsmedien. Zur Abdichtung des Magnetankerraums gegenüber einem das Ventil durchströmenden Medium ist eine Membran vorgesehen, welche einteilig mit einer längs der Strömung im Abschlussbereich verschiebbaren Dichtungseinrichtung mit Dichtflächen zum Anlegen an einen Ventilsitz ausgebildet ist, wobei ein Verlängerungsteil der Magnetankereinrichtung bis in den Bereich der Dichtungseinrichtung hineinragt und mit diesem über eine Federverbindung in Eingriff steht. Das von der DE 4308747 C2 offenbarte Mischventil ist relativ komplex und kleinteilig aufgebaut, wobei die verschiebbare Dichtungseinrichtung mit Dichtflächen zum Anlegen an einen ersten Ventilsitz als Bewegungsdichtung ausgeführt ist, die einen Reibschluss zu den korrespondierenden Dichtsitzen ausübt und daher funktionsbedingt einer relativ starken Alterung unterliegt. Schließlich offenbart die DE 4308747 C2 keine technische Lösung für eine druckmittelbasierte Ventilbetätigung.

Die DE 112011101201 B4 offenbart ein 3/3-Magnetventil in Sitzbauweise mit einer Solenoid-Dichtung zur Abdichtung des Magnetankerraums gegenüber dem Arbeitsteil. Das von der DE 112011101201 B4 offenbarte Magnetventil ist bauartbedingt relativ komplex und kleinteilig aufgebaut. Ferner unterliegen die beiden auf- und abrollen Membranen funktionsbedingt einem relativ starken Verschleiß. Schließlich offenbart die DE 112011101201 B4 keine technische Lösung für eine druckmittelbasierte Ventilbetätigung.

Die DE102015223943 A1 offenbart ein mechanisch einstellbares Membran-Druckregelventil in Sitzbauweise. Die gummielastische Membran dient der Abtrennung einer Federkammer von einer Regelkammer und ist kräfteübertragend mit einem gesonderten Ventilglied gekoppelt. Das von der DE102015223943 A1 offenbarte Magnetventil ist bauartbedingt relativ komplex und kleinteilig aufgebaut und weist etliche Toträume auf. Insbesondere ist keine hinreichende Reinigbarkeit und Sterilisierbarkeit der Regelkammer gegeben, die mit dem geregelten Sekundärkanal beispielsweise über einen Druckabgriffskanal mit einem lediglich geringen Leitungsquerschnitt verbunden ist.

Die DE 19711262 A1 offenbart ein 3/3-Wegeventil in Sitzbauweise mit einem Verschlusselement aus einem elastischen Dichtungsmaterial, welches entweder direkt an einem Anker eines Proportionalmagneten befestigt ist oder unmittelbar an einem Stellantrieb angeordnet ist und welches auf seiner dem Stellantrieb oder dem Anker abgewandten Seite mit einem Anschlag ausgebildet ist, der mit einem Ventilsitz zur Entlüftung korrespondiert. Das nach der DE19711262 A1 vorgesehene Verschlusselement besitzt in beiden offenbarten Grundausführungen einen relativ komplexen und verschleißanfälligen Aufbau, indem es entweder körperlich direkt an einem Anker befestigt ist und als Bewegungsdichtung umfangsseitig dichtend an eine umgebende Wandung einer Führungsbohrung anliegt, oder zur Verwendung als Druckregelventil membranartig ausgeführt ist und auf seiner einer Steuerkammer zugewandten Seite mit einem zweiten Anschlag ausgeführt ist, der zur Versteifung der Membrane im Wirkungsbereich des Ventilsitzes zur Entlüftung und der gleichzeitig als Endlagenbegrenzung dient. Zur Realisierung der 3/3-Wegefunktionalität ist das von der DE 19711262 A1 offenbarte Ventil zudem in sämtlichen Ausführungsvarianten insgesamt verhältnismäßig komplex mit einer Ventilhülse und mehreren Dichtringen und Federn ausgebildet.

Die JP 2001208237 A offenbart ein Sitzventil in Kolbenbauweise, dessen Ventilkolben einteilig mit einem Dichtsitz ausgebildet ist und welches einen faltenbalgartigen Abschnitt sowie einen innenliegenden Fluidkanal aufweist. Zum Schalten des Kolbens sind dessen zwei Steuerflächen wechselseitig über einen oberen und einen unteren Steuerraum beaufschlagbar, gegenüber denen der Kolben mit einem umlaufenden Dichtring abgedichtet ist. Der untere Steuerraum ist über einen zusätzlichen, sich radial vom Dichtsitz des Kolbens erstreckenden Dichtungskragen von einem Arbeitsraum getrennt. Das von der JP 2001208237 A offenbarte Sitzventil ist aufgrund der gewählten Funktionsweise verhältnismäßig komplex aufgebaut und benötigt einen relativ großen Bauraum.

Die US 2 942 837 A offenbart ein druckausgeglichenes Membran-Sitzventil mit einer zwischen zwei Kammern angeordneten Membran. Die Membran ist einteilig mit einem Hohlansatz ausgebildet, der einen Fluidkanal aufweist und zugleich einen Dichtsitz bildet. Zur Gewährleistung eines Druckausgleichs beidseitig der Membran ist diese mit einer Druckausgleichsöffnung durchsetzt. Hierdurch ist keine Medientrennung zwischen den beidseitig der Membran gebildeten Kammern gegeben. Ferner durchströmt dasselbe Druckmedium beim Öffnen des von der Membran gebildeten Dichtsitzes den im Dichtsitz angeordneten Fluidkanal. Das von der US 2 942 837 A offenbarte Membran-Sitzventil eignet sich daher nicht für Anwendungen, bei denen eine Trennung unterschiedlicher Steuer- und Arbeitsmedien zur Gewährleistung von Hygieneanforderungen erforderlich ist.

Das Dokument JP 2001 208237 A offenbart ein Membranventil nach dem Oberbegriff des Anspruchs 1. Die Dokumente CN 1 696 555 A, US 5 931 187 A, US 3 387 563 A und CN 100 342 163 C offenbaren Membranventilkonstruktionen, bei denen die Steuermembran und weitere Komponenten als gesonderte Bauteile ausgeführt sind.

### Offenbarung der Erfindung

Der Erfindung liegt die Aufgabe zu Grunde, die dargestellten Nachteile zu vermeiden. Insbesondere soll ein möglichst einfach aufgebautes Membranventil mit wenigen Bauteilen und einer guten Reinigbarkeit der von einem Arbeitsfluid durchströmten Ventilbereiche bereitgestellt werden.

Die Aufgabe wird erfindungsgemäß gelöst durch ein Membran-Sitzventil nach Anspruch 1. Vorteilhafte Weiterbildungen der Erfindung sind in den Unteransprüchen angegeben.

Der Kern der Erfindung bildet ein Membran-Sitzventil mit einer formelastischen, einen Steuerraum von einem Arbeitsraum trennenden Steuermembran, bei welchem die Steuermembran einteilig auf ihrer dem Steuerraum oder dem Arbeitsraum des Membran-Sitzventils zugewandten Seite mit einem Hohlansatz und auf ihrer dem Arbeitsraum zugewandten Seite mit einem Membranventilsitz ausgebildet ist, wobei der Innenraum des Hohlansatzes in den Membranventilsitz mündet und der Hohlansatz mit einem Fluidkanal des Membran-Sitzventils verbunden ist. Die Steuermembran ist einfach steuerbar, indem der Steuerraum mit einem gegenüber dem Arbeitsraum höheren Fluiddruck beaufschlagt oder auf die Membran aus der Richtung des Steuerraums eine Stellkraft ausgeübt wird. In diesem Fall wölbt sich die Steuermembran in Richtung des Arbeitsraums, wobei sich gleichzeitig der Membranventilsitz in diese Richtung bewegt. Im umgekehrten Fall, in dem der Arbeitsraum mit einem gegenüber dem Steuerraum höheren Druck beaufschlagt ist, wölbt sich die Steuermembran in Richtung des Steuerraums, wobei sich gleichzeitig der Membranventilsitz in diese Richtung bewegt. In der zweiten Bewegungsrichtung des Membranventilsitzes ist eine Fluidverbindung über den Innenraum des Hohlansatzes zu dem Fluidkanal des Membran-Sitzventils freigebbar, mit dem der Hohlansatz verbunden ist. Mit dem erfindungsgemäßen Membran-Sitzventil ist eine Bauteilreduzierung erreicht, indem ein Ventilsitz unmittelbar in die Steuermembran selbst integriert ist. Durch die Integration eines mit einem Fluidkanal verbundenen Hohlansatz werden gleichzeitig Toträume vermieden. Das erfindungsgemäße Membran-Sitzventil weist eine gute Reinigbarkeit sämtlicher von einem Arbeitsfluid durchströmten Ventilbereiche auf, da der Innenraum des Hohlansatzes und der von der Steuermembran gebildete Membranventilsitz einfach gespült werden können. Die Steuermembran ist gemeinsam mit den von ihr gebildeten Funktionsteilen konstruktiv einfach und kostengünstig einteilig als Elastomer- und/oder Kunststoffformteil herstellbar. Insbesondere ist die Steuermembran mit dem Hohlansatz und dem Membranventilsitz einfach als Elastomer in einem einzelnen urformenden oder umformenden Fertigungsschritt herstellbar.

Eine Verbindung des Hohlansatzes mit dem Fluidkanal ist einfach erreicht, indem der Hohlansatz in eine Öffnung des Fluidkanals einsteckbar oder auf diese aufsteckbar ausgebildet ist.

Das Membran-Sitzventil ist mit einem beweglichen Verschlusselement ausgebildet, welches ein mit dem Membranventilsitz korrespondierenden Erstverschlussmittel umfasst.

In einer konstruktiv einfachen Ausführungsform ist das Verschlusselement gegen den Membranventilsitz axialbeweglich gelagert. Ist der Steuerraum mit einem gegenüber dem Arbeitsraum höheren Fluiddruck beaufschlagt oder wird auf die Steuermembran aus der Richtung des Steuerraums eine Stellkraft ausgeübt, wölbt sich die Steuermembran in Richtung des Arbeitsraums, wobei sich gleichzeitig der Membranventilsitz und das mit diesem korrespondierende, axialbeweglich gelagerte Erstverschlussmittel in diese Richtung bewegen. Ist der Arbeitsraum mit einem gegenüber dem Steuerraum höheren Druck beaufschlagt, wölbt sich die Steuermembran in Richtung des Steuerraums, wobei sich gleichzeitig der Membranventilsitz in diese Richtung bewegt. In der zweiten Bewegungsrichtung des Membranventilsitzes ist eine Fluidverbindung über den Innenraum des Hohlansatzes zu dem Fluidkanal freigebbar.

Zur Vereinfachung der Rückstellung und zur Verbesserung des Dichtsitzes ist das Verschlusselement gegen den Membranventilsitz federbelastet ausgebildet.

Zur Realisierung einer 3-Wege-Funktionalität ist das Verschlusselement vorzugsweise als Doppelverschlusselement ausgebildet, welches an seinem der Steuermembran abgewandten Seite mit einem Zweitverschlussmittel ausgebildet ist, welches mit einem im Membran-Sitzventil gebildeten Zweitventilsitz korrespondiert.

In einer Ausführung als 3/3-Wegeventil ist unterhalb des Zweitventilsitzes ein Zweitarbeitsraum angeordnet und das Doppelverschlusselement durchgreift den Zweitventilsitz, indem das Zweitverschlussmittel auf der dem Zweitarbeitsraum zugewandten Seite dichtend an den Zweitventilsitz angreift oder in diesen eingreift. Ist in dieser Ausführungsform der Steuerraum mit einem gegenüber dem Arbeitsraum höheren Fluiddruck beaufschlagt oder wird auf die Steuermembran aus der Richtung des Steuerraums eine Stellkraft ausgeübt, wölbt sich die Steuermembran in Richtung des Arbeitsraums, wobei sich gleichzeitig der Membranventilsitz und das mit diesem korrespondierende, axialbeweglich gelagerte Doppelverschlusselement in diese Richtung bewegen. Hierbei hebt das Zweitverschlussmittel vom Zweitventilsitz ab und gibt eine Fluidverbindung zwischen dem Arbeitsraum und dem Zweitarbeitsraum frei. Bei der Wegnahme des Drucküberschusses oder der Stellkraft kehren die Steuermembran und das Doppelverschlusselement wieder in ihre Ausgangsstellung zurück, so dass die Fluidverbindung wieder geschlossen wird. Ist der Arbeitsraum mit einem gegenüber dem Steuerraum höheren Druck beaufschlagt, wölbt sich die Steuermembran in Richtung des Steuerraums, wobei sich gleichzeitig der Membranventilsitz in diese Richtung bewegt und eine Fluidverbindung zwischen dem Arbeitsraum und dem Fluidkanal freigibt.

In einer bautechnisch einfachen Ausführung ist das das Doppelverschlusselement hantelförmig ausgebildet, wobei das Erstverschlussmittel und das Zweitverschlussmittel jeweils kugelförmig geformt sind.

In einer konstruktiv einfachen Ausführung ist die Steuermembran über den Steuerraum elektromagnetisch steuerbar ausgeführt. Hierbei greift auf der dem Steuerraum zugewandten Seite der Steuermembran vorzugsweise ein elektromagnetisch bewegbares Stellelement an diese an.

In einer alternativen konstruktiv einfachen Ausführung ist die Steuermembran über den Steuerraum mit einem Steuerdruck beaufschlagbar.

Weitere Vorteile der Erfindung sind nachstehend gemeinsam mit der Beschreibung bevorzugter Ausführungsbeispiele der Erfindung anhand der Figuren näher dargestellt. Es zeigen:
- Fig. 1: eine schematische Schnittdarstellung eines Membran-Sitzventils;
- Fig. 2: ein schematisches Schaltbild einer Flaschenbefüllungsanlage mit einem Membran-Sitzventil gemäß Fig. 1.
- Fig. 3: eine schematische Schnittdarstellung einer alternativen Ausführung des Membran-Sitzventils gemäß Fig. 1;
- Fig. 4: eine schematische Schnittdarstellung einer weiteren alternativen Ausführung des Membran-Sitzventils gemäß Fig. 1.

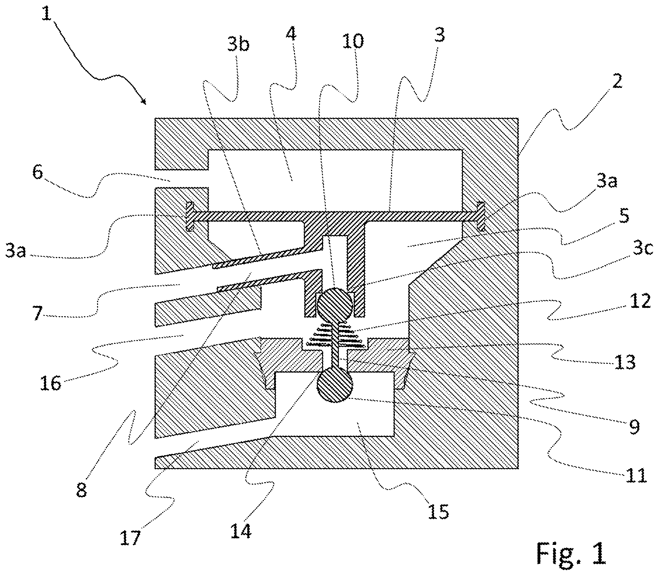

Fig. 1 zeigt das Membran-Sitzventil 1 in einer schematischen Schnittdarstellung. Im Ventilgehäuse 2 ist die flächige, aus einem formelastischen Material bestehende Steuermembran 3 mit dem umlaufenden Wulst 3a randseitig eingespannt. Die Steuermembran 3 trennt den Steuerraum 4 fluidisch vom Arbeitsraum 5. In den Steuerraum 4 mündet der Steuerkanal 6, über den der Steuerraum 4 mit einem Steuerdruck beaufschlagbar ist. Die Steuermembran 3 ist auf ihrer dem Arbeitsraum 5 zugewandten Seite einteilig mit dem Hohlansatz 3b ausgebildet, der formschlüssig in den Entlüftungskanal 7 eingesteckt ist. Ferner ist die Steuermembran 3 auf ihrer dem Arbeitsraum 5 zugewandten Seite einteilig mit dem Membranventilsitz 3c ausgebildet. Der Innenraum 8 des Hohlansatzes 3b mündet in den Membranventilsitz 3c. Unterhalb des Membranventilsitzes 3c ist das axialbeweglich gelagerte Doppelverschlusselement 9 angeordnet. Das Doppelverschlusselement 9 besitzt eine Hantelform mit einem kugelförmigen Erstverschlussmittel 10 und einem mit diesem über einen Steg verbundenen Zweitverschlussmittel 11. Das Doppelverschlusselement 9 ist mit der Druckfeder 12 federbelastet zwischen dem Membranventilsitz 3c und dem Ventileinsatz 13 gehalten, der auf seiner Unterseite den Zweitventilsitz 14 bildet. Hierbei durchgreift das Doppelverschlusselement 9 den Ventileinsatz 13 und den Zweitventilsitz 14, wobei das Zweitverschlussmittel 11 auf der dem im vorliegenden Ausführungsbeispiel als Eingangsdruckraum 15 fungierenden Zweitarbeitsraum zugewandten Seite dichtend an den Zweitventilsitz 14 angreift. In den Arbeitsraum 5 mündet der Ausgangskanal 16. In den Eingangsdruckraum 15 mündet der Eingangskanal 17.

Die Darstellung Fig. 1 zeigt das Membran-Sitzventil 1 in seiner Ruhestellung, in welcher keine Druckdifferenz zwischen dem Steuerraum 4 und dem Arbeitsraum 5 besteht. Der Entlüftungskanal 7 ist durch den Dichtsitz des Erstverschlussmittels 10 im Membranventilsitz 3c fluidisch vom Arbeitsraum 5 und dem Ausgangskanal 16 getrennt. Gleichzeitig sind der Ausgangskanal 16 und der Arbeitsraum 5 durch den Dichtsitz des Zweitverschlussmittels 11 im Zweitventilsitz 14 fluidisch vom Eingangsdruckraum 15 und dem Eingangskanal 17 getrennt. Indem der Steuerraum 4 mit einem gegenüber dem Arbeitsraum 5 höheren Fluiddruck beaufschlagt wird, wölbt sich die Steuermembran 3 in Richtung des Arbeitsraums 4, wobei sich gleichzeitig der mit dieser einteilig ausgeführte und daher ebenfalls aus einem formelastischen Material bestehende Hohlansatz 3b leicht verbiegt. Mit der Hubbewegung der Steuermembran 3 verschieben sich der Membranventilsitz 3c und das Doppelverschlusselement 9 axial gegen die Belastung der Druckfeder 12. Hierbei löst sich das Zweitverschlussmittel 11 vom Zweitventilsitz 14. Der Eingangskanal 17 und der Eingangsdruckraum 15 stehen mit dem Arbeitsraum 5 und dem Ausgangskanal 16 in einer Fluidverbindung. Bei der Wegnahme des Drucküberschusses in der Steuerkammer 4 kehren die Steuermembran 3 und das Doppelverschlusselement 9 wieder in ihre Ruhestellung zurück, so dass die Fluidverbindung wieder geschlossen ist. Ist der Arbeitsraum 5 mit einem gegenüber dem Steuerraum 4 höheren Druck beaufschlagt, zum Beispiel in Folge eines Lastwechsels am Ausgangskanal 16, wölbt sich die Steuermembran 3 in Richtung des Steuerraums 4, wobei sich gleichzeitig der Membranventilsitz 3c axial in diese Richtung verschiebt. Korrespondierend zum Hub der Steuermembran 3 verbiegt sich der formelastische Hohlansatz 3b leicht. Mit der Hubbwegung hebt der Membranventilsitz 3c vom Erstverschlussmittel 10 ab und gibt eine Fluidverbindung zwischen dem Ausgangskanal 16, dem Arbeitsraum 5 und dem Entlüftungskanal 7 und der Atmosphäre frei. Der Ausgangskanal 16 ist damit im Fall eines auftretenden Drucküberschusses im Arbeitsraum 5 über den Entlüftungskanal 7 entlüftbar.

Das Membran-Sitzventil 1 ist mit verhältnismäßig wenigen Bauteilen konstruktiv einfach herstellbar. Die Steuermembran ist gemeinsam mit den von ihr gebildeten Funktionsteilen konstruktiv einfach und kostengünstig einteilig als Kunststoffformteil herstellbar, zum Beispiel als Elastomer in einem einzelnen urformenden oder umformenden Fertigungsschritt. Auch der Ventileinsatz 13 mit dem Zweitventilsitz 14 ist einfach als Kunststoffformteil herstellbar und per einfacher Schnappmontage in einer korrespondierenden Aussparung im Ventilgehäuse 2 montierbar. Sämtliche Dichtsitze des Membran-Sitzventils 1 sind als formschlüssige Kontaktdichtungen ohne wesentliche Reibungsmomente verschleißarm. Das Doppelverschlusselement 9 ist einfach als im Wege einer Aufweit- und/oder Einpressmontage in den Ventileinsatz 13 einsetzbar. Das Membran-Sitzventil 1 weist ferner eine gute Reinigbarkeit auf, da sämtliche Bauteile und Bereiche unterhalb der Steuermembran 3 einfach gespült werden können, indem am Ausgangskanal 16 oder am Eingangskanal 17 ein Reinigungsmedium, beispielsweise ein erhitztes Reinigungsgas oder eine Reinigungsflüssigkeit, mit ausreichendem Druck eingeleitet wird. Bei der Einleitung des Reinigungsmediums über den Eingangskanal 17 erfolgt vorher oder gleichzeitig eine Beaufschlagung des Steuerraums 4, um das Zweitverschlussmittel 11 vom Zweitventilsitz 14 zu lösen und eine Fluidverbindung zum Arbeitsraum 5 und zum Ausgangskanal 16 herzustellen. Somit ist der Arbeitsbereich des Membran-Sitzventils 1 vollständig reinigbar und je nach verwendetem Reinigungsmedium auch desinfizierbar. Gleichzeitig ist der Entlüftungsbereich des Membran-Sitzventils 1 einfach reinigbar, indem ein Reinigungsmedium über den Entlüftungskanal 7 mit Druck entgegen der Kraft der Druckfeder 12 eingeleitet wird.

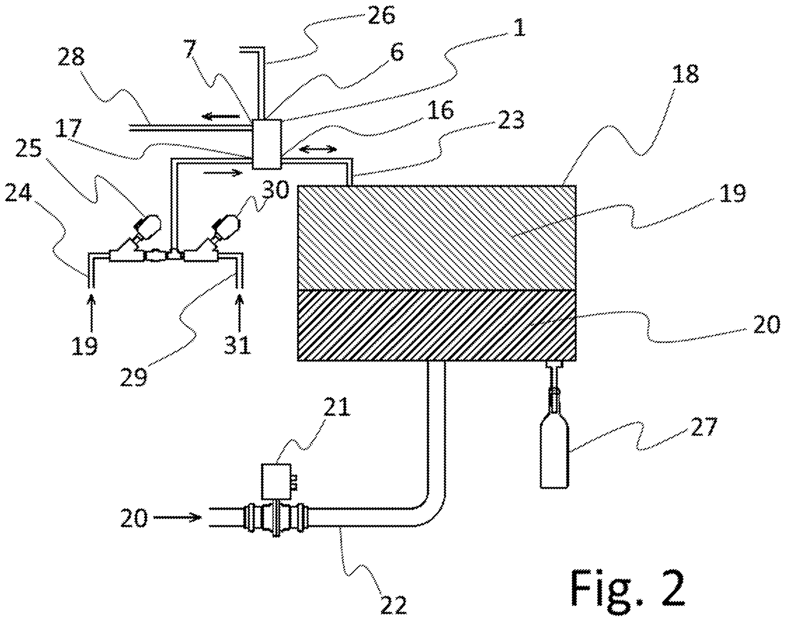

Fig. 2 zeigt das Membran-Sitzventil 1 in einer beispielhaften Anwendung zur Befüllungssteuerung als schematisches Schaltbild einer Flaschenbefüllungsanlage. Der Tank 18 ist teilweise mit einem gasförmigen Steuerungsmedium 19 und einem flüssigen Befüllungsmedium 20 gefüllt. Die Zuführung des Befüllungsmediums 20 zum Tank 18 erfolgt über die mit dem Schaltventil 21 kontrollierte erste Zuführleitung 22. Die Zuführung des Steuerungsmediums 19 zum Tank 18 erfolgt über die mit dem Membran-Sitzventil 1 gesteuerte weitere Zuführleitung 23. Hierzu ist der Eingangskanal 17 des Membran-Sitzventils 1 mit der Eingangsleitung 24 für das Steuerungsmedium 19 verbindbar. Die Eingangsleitung 24 ist über das erste Absperrventil 25 absperrbar. Über die Regulierung des Fluiddrucks des Steuerungsmediums 19 im Tank 18 mit dem Membran-Sitzventil 1 erfolgt bei gleichzeitig geöffneter Zuführung des Befüllungsmediums 20 die Steuerung der Befüllung der Flasche 27. Hierzu ist der Steuerkanal 6 des Membran-Sitzventils 1 über die Steuerleitung 26 mit einem Fluiddruck beaufschlagbar. Im Falle der Beaufschlagung des Steuerkanals 6 mit einem ausreichenden Fluiddruck öffnet das Membran-Sitzventil 1 und gibt das über die Eingangsleitung 24 eingehende Steuerungsmedium 19 über den Ausgangskanal 16 und die Zuführleitung 23 an den Tank 18 ab. Mit dem erhöhten Druck des Steuerungsmediums 19 im Tank 18 erfolgt die Befüllung der Flasche 27. Im Falle eines Überdrucks am Ausgangskanal 16 erfolgt eine Entlüftung über den Entlüftungskanal 7 des Membran-Sitzventils 1 und die Entlüftungsleitung 28. Zur Reinigung des Arbeitsbereichs des Membran-Sitzventils 1 und des Tanks 18 wird die Eingangsleitung 24 über das erste Absperrventil 25 abgesperrt und die die Spülleitung 29 über das über das zweite Absperrventil 30 geöffnet, so dass ein Reinigungsfluid 31 in einem CIP- oder SIP-Prozess in das System eingeleitet werden kann. Hierbei wird das Membran Sitzventil 1 gleichzeitig über den Steuerkanal 6 beaufschlagt, um das Zweitverschlussmittel 11 vom Zweitventilsitz 14 zu lösen und eine Fluidverbindung zum Arbeitsraum 5 und zum Ausgangskanal 16 herzustellen.

Die Flaschenbefüllungsanlage gemäß der Fig. 2 besitzt den Vorteil, dass im Betrieb oder bei der Reinigung nicht auf eine Verschmutzung des Membran-Sitzventils 1 mit dem Befüllungsmedium 20 geachtet werden muss, da dessen Arbeits- und Entlüftungsbereich einfach und vollständig reinigbar ist.

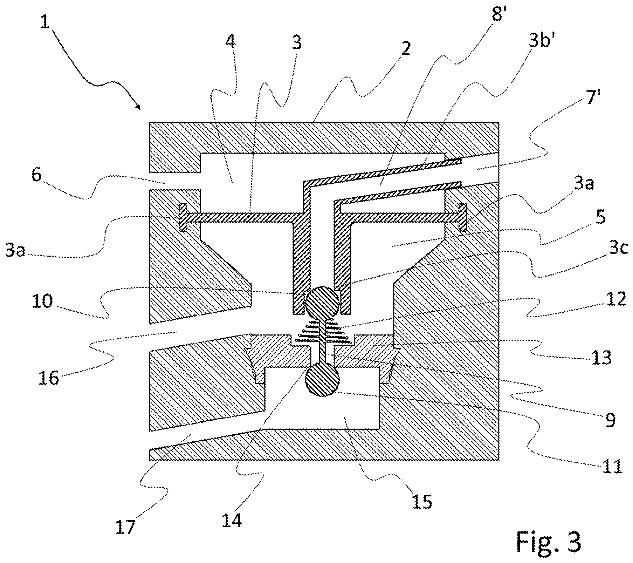

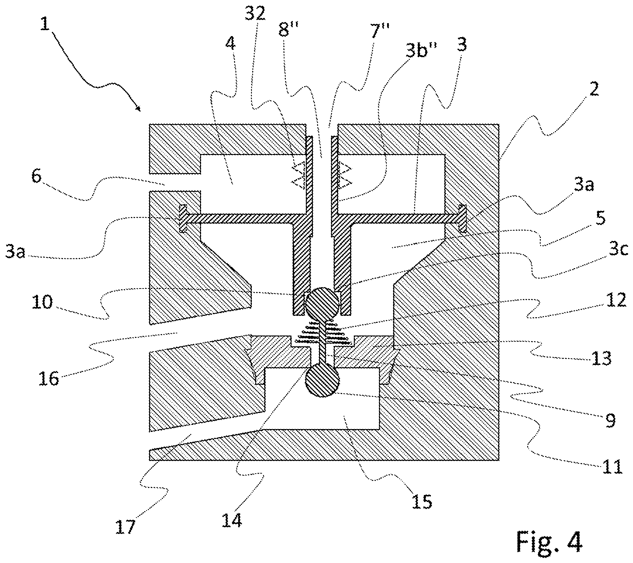

Die Figuren Fig. 3 und 4 zeigen alternative Ausführungen des Membran-Sitzventils 1, bei denen der Hohlansatz 3b' und 3b" jeweils auf der dem Steuerraum (4) zugewandten Seite angeordnet ist. Die vorstehend beschriebene Funktionsweise bleibt hierbei gleich. Im Falle der Ausführung gemäß der in Fig. 4 ist der Hohlansatz 3b" allerdings senkrecht zur Ebene der Steuermembran 3 angeordnet, weshalb der Membranhub nicht durch eine Biegebewegung des Hohlansatzes 3b" ausgleichen werden kann. Zum Ausgleich des Membranhubs in axialer Richtung ist der Hohlansatz 3b" daher entweder über einen Teilabschnitt mit einem in Fig. 4 gestrichelt eingezeichneten Faltenbalg 32 ausgebildet. Alternativ ist der Hohlansatz 3b" axial gleitend im Entlüftungskanal 7" angeordnet und mit einer ihn umgreifenden Bewegungsdichtung, beispielsweise einer Ringdichtung oder Dichthülse (beides nicht dargestellt in Fig. 4) im Entlüftungskanal 7" gelagert.

### Bezugszeichenliste

- 1: Membran-Sitzventil
- 2: Ventilgehäuse
- 3: Steuermembran
- 3a: Wulst
- 3b, 3b', 3b": Hohlansatz
- 3c: Membranventilsitz
- 4: Steuerraum
- 5: Arbeitsraum
- 6: Steuerkanal
- 7, 7', 7": Entlüftungskanal
- 8, 8', 8": Innenraum
- 9: Doppelverschlusselement
- 10: Erstverschlussmittel
- 11: Zweitverschlussmittel
- 12: Druckfeder
- 13: Ventileinsatz
- 14: Zweitventilsitz
- 15: Eingangsdruckraum
- 16: Ausgangskanal
- 17: Eingangskanal
- 18: Tank
- 19: Steuerungsmedium
- 20: Befüllungsmedium
- 21: Schaltventil
- 22,23: Zuführleitung
- 24: Eingangsleitung
- 25, 30: Absperrventil
- 26: Steuerleitung
- 27: Flasche
- 28: Entlüftungsleitung
- 29: Spülleitung
- 31: Reinigungsfluid
- 32: Faltenbalg

## Patentansprüche

1. Membran-Sitzventil (1) mit einer formelastischen, einen Steuerraum (4) von einem Arbeitsraum (5) trennenden Steuermembran (3), die einteilig auf ihrer dem Steuerraum (4) oder dem Arbeitsraum (5) des Membran-Sitzventils (1) zugewandten Seite mit einem Hohlansatz (3b, 3b', 3b") und auf ihrer dem Arbeitsraum (5) zugewandten Seite mit einem Membranventilsitz (3c) ausgebildet ist, wobei der Innenraum (8, 8', 8") des Hohlansatzes in den Membranventilsitz (3c) mündet und der Hohlansatz (3b, 3b', 3b") mit einem Fluidkanal des Membran-Sitzventils (1) verbunden ist und der Hohlansatz (3b, 3b', 3b") in eine Öffnung des Fluidkanals einsteckbar oder auf diese aufsteckbar ausgebildet ist, **dadurch gekennzeichnet, dass** das Membran-Sitzventil (1) mit einem beweglichen Verschlusselement ausgebildet ist, welches ein mit dem Membranventilsitz (3c) korrespondierendes Erstverschlussmittel (10) umfasst.

2. Membran-Sitzventil (1) nach Anspruch 1, **dadurch gekennzeichnet, dass** das Verschlusselement gegen den Membranventilsitz (3c) axialbeweglich gelagert ist.

3. Membran-Sitzventil (1) nach Anspruch 2, **dadurch gekennzeichnet, dass** das Verschlusselement gegen den Membranventilsitz (3c) federbelastet ausgebildet ist.

4. Membran-Sitzventil (1) nach Anspruch 2 oder 3, **dadurch gekennzeichnet, dass** das Verschlusselement als Doppelverschlusselement (9) ausgebildet ist, welches an seinem der Steuermembran (3) abgewandten Seite mit einem Zweitverschlussmittel (11) ausgebildet ist, welches mit einem im Membran-Sitzventil (1) gebildeten Zweitventilsitz (14) korrespondiert.

5. Membran-Sitzventil (1) nach Anspruch 4, **dadurch gekennzeichnet, dass** unterhalb des Zweitventilsitzes (14) ein Zweitarbeitsraum angeordnet ist und das Doppelverschlusselement (9) den Zweitventilsitz (14) durchgreift, indem das Zweitverschlussmittel (11) auf der dem Zweitarbeitsraum zugewandten Seite dichtend an den Zweitventilsitz (14) angreift oder in diesen eingreift.

6. Membran-Sitzventil (1) nach Anspruch 5, **dadurch gekennzeichnet, dass** das Doppelverschlusselement (9) hantelförmig ist, wobei das Erstverschlussmittel (10) und das Zeitverschlussmittel (11) jeweils kugelförmig geformt sind.

7. Membran-Sitzventil (1) nach Anspruch 5 oder 6, **dadurch gekennzeichnet, dass** mit einer Hubbewegung der Steuermembran (3) in Richtung des Steuerraums (4) eine Fluidverbindung zwischen dem Fluidkanal und dem Arbeitsraum (5) herstellbar ist und mit der entgegengesetzten Hubbewegung eine Fluidbewegung zwischen dem Arbeitsraum (5) und dem Zweitarbeitsraum.

8. Membran-Sitzventil (1) nach einem der Ansprüche 1 bis 7, **dadurch gekennzeichnet, dass** die Steuermembran (3) über den Steuerraum elektromagnetisch steuerbar ist.

9. Membran-Sitzventil (1) nach einem der Ansprüche 1 bis 8, **dadurch gekennzeichnet, dass** die Steuermembran (3) über den Steuerraum (4) mit einem Steuerdruck beaufschlagbar ist.

## Claims

1. Diaphragm seat valve (1) having a dimensionally elastic control diaphragm (3) which separates a control chamber (4) from a working chamber (5) and is formed in one piece with a hollow projection (3b, 3b`, 3b") on its side facing the control chamber (4) or the working chamber (5) of the diaphragm seat valve (1) and with a diaphragm valve seat (3c) on its side facing the working chamber (5), wherein the interior space (8, 8', 8") of the hollow projection extends into the diaphragm valve seat (3c) and the hollow projection (3b, 3b`, 3b") is connected to a fluid channel of the diaphragm seat valve (1) and the hollow projection (3b, 3b`, 3b") being designed to be plugged into or onto an opening of the fluid channel, **characterized in that** the diaphragm seat valve (1) is designed having a movable closure element which comprises a first closure means (10) corresponding to the diaphragm valve seat (3c).

2. Diaphragm seat valve (1) according to claim 1, **characterized in that** the closure element is mounted so as to be axially movable against the diaphragm valve seat (3c).

3. Diaphragm seat valve (1) according to claim 2, **characterized in that** the closure element is spring-loaded against the diaphragm valve seat (3c).

4. Diaphragm seat valve (1) according to claim 2 or claim 3,
**characterized in that** the closure element is designed as a double closure element (9) which, on its side facing away from the control diaphragm (3), is designed with a second closure means (11) which corresponds to a second valve seat (14) formed in the diaphragm seat valve (1).

5. Diaphragm seat valve (1) according to claim 4, **characterized in that** a second working chamber is arranged below the second valve seat (14) and the double closure element (9) engages through the second valve seat (14) by the second closure means (11) sealingly engaging on or engaging in the second valve seat (14) on the side facing the second working chamber.

6. Diaphragm seat valve (1) according to claim 5, **characterized in that** the double closure element (9) is dumbbell-shaped, the first closure means (10) and the second closure means (11) each being spherically shaped.

7. Diaphragm seat valve (1) according to claim 5 or claim 6,
**characterized in that** a fluid connection between the fluid channel and the working chamber (5) can be produced with a stroke movement of the control diaphragm (3) in the direction of the control chamber (4) and a fluid movement between the working chamber (5) and the secondary working chamber with the opposite stroke movement.

8. Diaphragm seat valve (1) according to any of claims 1 to 7,
**characterized in that** the control diaphragm (3) is electromagnetically controllable via the control chamber.

9. Diaphragm seat valve (1) according to any of claims 1 to 8,
**characterized in that** the control diaphragm (3) can be subjected to a control pressure via the control chamber (4).

## Revendications

1. Soupape à siège à membrane (1) comportant une membrane de commande (3) de forme élastique et séparant un espace de commande (4) d'un espace de travail (5), laquelle membrane de commande est réalisée d'un seul tenant, sur son côté tourné vers l'espace de commande (4) ou l'espace de travail (5) de la soupape à siège à membrane (1), avec un appendice creux (3b, 3b', 3b") et, sur son côté tourné vers l'espace de travail (5), avec un siège de soupape à membrane (3c), dans laquelle l'espace intérieur (8, 8', 8") de l'appendice creux débouche dans le siège de soupape à membrane (3c) et l'appendice creux (3b, 3b', 3b") est relié à un canal pour fluide de la soupape à siège à membrane (1) et l'appendice creux (3b, 3b', 3b") est réalisé de manière à pouvoir être inséré dans une ouverture du canal pour fluide ou de manière à pouvoir être enfilé sur celle-ci, **caractérisée en ce que** la soupape à siège à membrane (1) est réalisée avec un élément de fermeture mobile qui comprend un moyen de fermeture primaire (10) correspondant au siège de soupape à membrane (3c).

2. Soupape à siège à membrane (1) selon la revendication 1,
**caractérisée en ce que** l'élément de fermeture est monté de manière à être mobile axialement contre le siège de soupape à membrane (3c).

3. Soupape à siège à membrane (1) selon la revendication 2,
**caractérisée en ce que** l'élément de fermeture est réalisé de manière à être chargé par ressort contre le siège de soupape à membrane (3c).

4. Soupape à siège à membrane (1) selon la revendication 2 ou 3, **caractérisée en ce que** l'élément de fermeture est réalisé en tant qu'élément de fermeture double (9) qui est réalisé, sur son côté opposé à la membrane de commande (3), avec un moyen de fermeture secondaire (11) correspondant à un siège de soupape secondaire (14) formé dans la soupape à siège à membrane (1).

5. Soupape à siège à membrane (1) selon la revendication 4,
**caractérisée en ce qu'**un espace de travail secondaire est disposé en dessous du siège de soupape secondaire (14) et l'élément de fermeture double (9) traverse le siège de soupape secondaire (14) par le fait que le moyen de fermeture secondaire (11) vient en prise de manière étanche sur le siège de soupape secondaire (14), ou vient en prise dans celui-ci, sur le côté tourné vers l'espace de travail secondaire.

6. Soupape à siège à membrane (1) selon la revendication 5,
**caractérisée en ce que** l'élément de fermeture double (9) est en forme d'haltère, dans laquelle le moyen de fermeture primaire (10) et le moyen de fermeture secondaire (11) sont respectivement formés en forme de sphère.

7. Soupape à siège à membrane (1) selon la revendication 5 ou 6, **caractérisée en ce que,** avec un mouvement de course de la membrane de commande (3) en direction de l'espace de commande (4), une liaison fluidique entre le canal pour fluide et l'espace de travail (5) peut être établie, et, avec le mouvement de course opposé, un mouvement fluidique entre l'espace de travail (5) et l'espace de travail secondaire.

8. Soupape à siège à membrane (1) selon l'une des revendications 1 à 7, **caractérisée en ce que** la membrane de commande (3) peut être commandée de manière électromagnétique par l'intermédiaire de l'espace de commande.

9. Soupape à siège à membrane (1) selon l'une des revendications 1 à 8, **caractérisée en ce que** la membrane de commande (3) peut être sollicitée par une pression de commande par l'intermédiaire de l'espace de commande (4).
